(19) Europäisches Patentamt
European Patent Office
Office européen des brevets

(11) EP 4 763 813 A1

(12) EUROPEAN PATENT APPLICATION

(43) Date of publication:
**24.06.2026 Bulletin 2026/26**

(21) Application number: **24221608.3**

(22) Date of filing: **19.12.2024**

(51) International Patent Classification (IPC):
***C03B 5/167*** *(2006.01)* ***C03B 7/07*** *(2006.01)*
***C03B 17/04*** *(2006.01)* ***C03B 5/16*** *(2006.01)*

(52) Cooperative Patent Classification (CPC):
**C03B 17/04; C03B 5/163; C03B 5/1672; C03B 7/07**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SCHOTT AG**
**55122 Mainz (DE)**

(72) Inventors:
- **EICHHOLZ, Rainer**
  **95666 Mitterteich (DE)**
- **AHRENS, Jens**
  **95666 Mitterteich (DE)**
- **PFEIFFER, Thomas**
  **55218 Ingelheim (DE)**

(74) Representative: **Schott Corporate IP**
**Hattenbergstraße 10**
**55122 Mainz (DE)**

# (54) METHOD FOR REDUCING THE AMOUNT OF GAS BUBBLES ON THE SURFACE OF A GLASS TUBE AND APPARATUS THEREFORE

(57) The present invention refers to a glass tube forming apparatus comprising a tube forming body configured to receive a flow of molten glass, wherein the molten glass is withdrawn from the forming body in form of a glass tube, and at least one metallic electrode, wherein the at least one metallic electrode is mounted in the glass melt in spaced relation to the tube forming body, wherein the tube forming body is covered at least partly with a metallic layer, and wherein the tube forming body is connected electrical with the at least one electrode. Furthermore, the present invention refers to a method for reducing the amount of gas bubbles on the contact surface of a glass tube glass tube, a glass tube produced by the method as well as to the use of such a glass tube in the pharmaceutical sector.

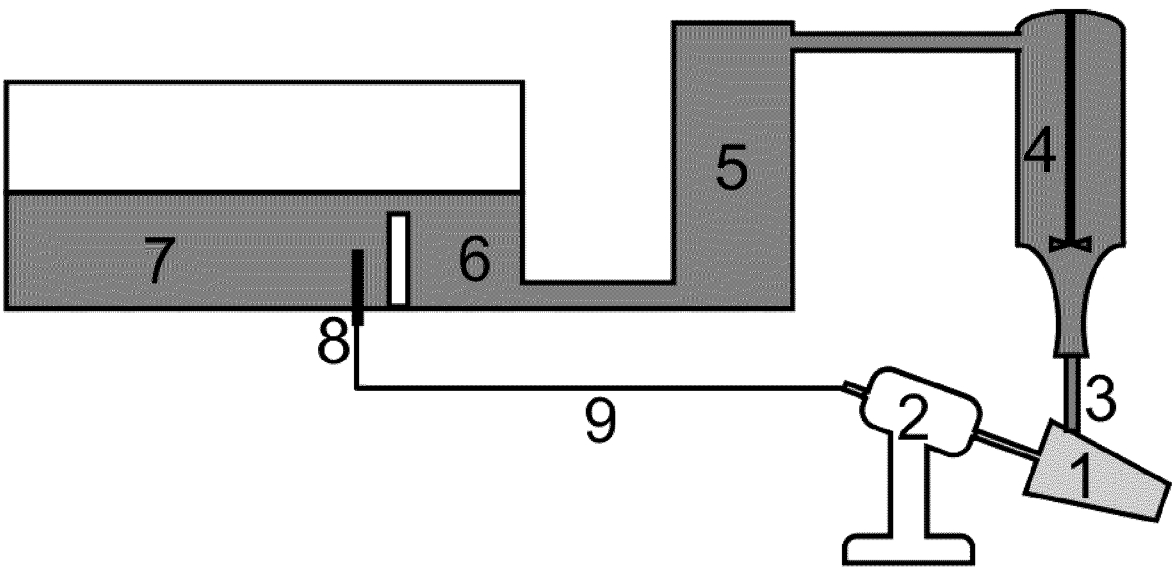


Figure 1

EP 4 763 813 A1

## Description

The present invention refers to a glass tube forming apparatus comprising a tube forming body configured to receive a flow of molten glass, wherein the molten glass is withdrawn from the forming body in form of a glass tube, and at least one metallic electrode, wherein the at least one metallic electrode is mounted in the glass melt in spaced relation to the tube forming body, wherein the tube forming body is covered at least partly with a metallic layer, and wherein the tube forming body is connected electrical with the at least one electrode. Furthermore, the present invention refers to a method for reducing the amount of gas bubbles on the contact surface of a glass tube, a glass tube produced by the method as well as to the use of such a glass tube in the pharmaceutical sector.

Prior art

Methods for producing glass tubes as well as glass tube forming apparatuses have been known for centuries. Nevertheless, there are still a number of fundamental problems today, arising from the nature of the glasses themselves and from the associated production methods. One such problem is, for example, that the glass melts always contain a certain amount of water which might be present in dissolved molecular form, but also as OH groups bound to individual melt components. Due to the very high temperatures needed for melting the melt components and processing the glass melt, the water present in the glass melt might split into a more or less large percentage of hydrogen and oxygen by the following redox reaction:

$$2H_2O \rightleftarrows 2H_2\uparrow + O_2\uparrow \qquad (1)$$

comprising the following sub-steps:

$$2H_2O \rightarrow 4H^+ + 2O^{2-} \qquad (2)$$

$$4H^+ + 4e \rightarrow 2H_2\uparrow \qquad (3)$$

$$2O^{2-} \rightarrow O_2\uparrow + 4e \qquad (4)$$

Often the glass tube forming apparatuses are permeable for hydrogen, so that the hydrogen can diffuse out of the glass melt. Due to the withdrawal of Hz, the equilibrium of reaction (1) is shifted to the right-hand side of the reaction equation. This results in a local depletion of hydrogen and an increase of oxygen $O_2$ in the melt. If the produced oxygen is no longer chemically bound and the oxygen concentration in the glass melt exceeds a critical value, the so-called saturation concentration, small oxygen-containing bubbles can occur in the glass melt. If these gas bubbles enter the product, the quality of the generated glass products, especially for the use in the pharmaceutically sector, is significantly affected and the yield of a bubble-free glass will be drastically reduced. It is especially problematic if small gas bubbles occur on the surface of the glass tubes. These gas bubbles lead to elongated bubbles during the hot forming and drawing process also called "air lines" or sometimes "seeds". More precisely, these gas bubbles might result in closed airlines and, in case the bubbles are very close to the surface, they open during the hot forming and drawing process, resulting in so-called "open airlines" as glass defects.

"Open airlines" might affect the volume of the obtained, vials, cartridges and syringes that are produced from the glass tubes. "Closed airlines" often comprise only very thin glass membranes, that might crush due to force of a liquid, resulting in glass glimmers within that liquid.

Even if the underlying reaction (1) for the mechanism of water decomposition and hence local formation of gas bubbles in the melt initially appears very simple, in practice it is difficult to be controlled or described, since the decomposition of water in a glass melt is influenced by a great number of factors, in particular by the water content and solubility of water in the melt; type of the one or more metal(s) with which the melt comes into contact; thickness of the metal-comprising component; temperature and dwell time of the glass; redox state of the glass; type and content of the redox-active components (e.g. refining agents) in the glass melt or composition of the atmosphere.

Furthermore, even if glass is a non-conductive material in the solid state, it is an electrical conductive electrolyte in melted form and can transmit voltage potentials that are present in the melt. However, especially direct current (DC) voltage potentials can be critical for the formation of gas bubbles in the melt due to a shift of the pOz. These direct current voltage potentials can occur in the system, for example, due to electrodes in the system, especially in the melting tank, or due to battery effects.

In order to avoid the occurrence of gas bubbles in the end product, several measures are used in the prior art. For example, particularly low-water raw materials can be used, or redox-active components can be added to the glass melt. Such a glass composition with redox-active components is, for example, known from EP0464501. Also, the temperature of

the glass melt or the dwell time on the noble metal-comprising component may be adjusted so that no bubbles will arise. Furthermore, an electric current can be used to maintaining an electrical negative potential difference in the glass melt compared to components made of metal subsequent to the melting tank as described in DE19955827.

However, there are some limits to each of these measures, for example when a high-viscosity glass is melted, which due to the high melt viscosity will have a dwell time that cannot be reduced to below a critical dwell time. The addition of redox-active substances may lead to the formation of detrimental components in the melt. If bubble formation occurs at the outlet of the melting unit, it is moreover not readily possible to adjust a temperature which is known to cause no decomposition of the water in the melt, since certain requirements in terms of melt viscosity and hence temperature have to be met for the hot forming of glass. In such cases, measures have to be taken which reduce or even completely prevent the mechanism of water decomposition and, therefore, the formation of gas bubbles.

Therefore, although there are a number of approaches for reducing the mechanism of water decomposition and/or hydrogen removal, these methods still have a number of drawbacks as mentioned above. What is lacking, therefore, is a simple and cost-efficient apparatus and method for producing glass products from a melt, in which bubble formation is reduced or even completely suppressed to produce glass tubes with a reduced amount of gas bubbles on the contact surface of a glass tube and, therefore, with a reduced amount of an aggregated airline length on the surface on the inside of the glass tube. Furthermore, the apparatus and the method should be designed in such a way that gas bubbles at the drawing tool are reduced or eliminated. The process should be easy to handle. In particular, it is desirable that no additional chemicals such as heavy metals are used in the glass melt. Furthermore, the time for drawing and further processing of the tubes should not be greatly affected. It is also desirable that the method is designed in such a way that existing apparatuses can be used to a large extent and only require a small amount of conversion in order to save costs. Of course, the equipment used must be simple and safe to operate.

These and further objects have been solved by the apparatus and the method according to the present invention.

Disclosure of the invention

The foregoing and other objects are solved by the subject-matter as defined herein in the independent claims.

According to one aspect of the present invention, a glass tube forming apparatus is provided, comprising:

a) a tube forming body configured to receive a flow of molten glass, wherein the molten glass is withdrawn from the forming body in form of a glass tube, and
b) at least one metallic electrode, wherein the at least one metallic electrode is mounted in the glass melt in spaced relation to the tube forming body,

wherein the tube forming body is covered at least partly with a metallic layer,
and wherein the tube forming body is connected electrical with the at least one electrode.

According to another aspect of the present invention, a method for reducing the amount of gas bubbles on the contact surface of a glass tube is provided, the method comprising the steps of

i) providing a tube forming body, configured to receive a flow of molten glass, wherein the tube forming body is covered at least partly with a metallic layer, and
ii) providing at least one metallic electrode, wherein the at least one metallic electrode is mounted in the glass melt in spaced relation to the tube forming body,
iii) providing an electrical connection between the tube forming body and the at least one electrode,
iv) generating a potential drop between the tube forming body and the at least one electrode to cause a direct current and
v) withdrawing the molten glass from the tube forming body in form of a glass tube during the direct current flows between the tube forming body and the at least one electrode.

According to another aspect of the present invention a glass tube produced by the inventive method is provided. According to another embodiment the inventive glass tube has an aggregated airline length of less than 0.10 m per 1.0 m tube length on the contact surface of the glass tube, wherein the aggregated airline length is defined as the sum of the lengths of closed airlines having a length > 15 mm and open airlines having a length > 2 mm.

According to another embodiment of the present invention the inventive glass tube is used as an intermediate product for the production of pharmaceutical containers, preferably for the production of ampoules, vials, syringes and/or cartridges.

The inventors surprisingly found that with the inventive apparatus and the inventive method, it is possible to reduce or even avoid the gas bubble formation, especially the formation of oxygen bubbles, on the surface of a glass tube

that has direct contact with the metal on the tube forming body when the glass tube is produced. This is especially advantageous since due to the reduced oxygen bubble formation on the surface of a glass tube, it is possible to produce glass tubes with a reduced amount of aggregated airline length, especially with an aggregated airline length of less than 0.10 m per 1.0 m tube length on the contact surface of the glass tube. Due to the reduced amount of gas bubbles the yield of the glass tubes can be improved. Furthermore, by the inventive apparatus and the inventive method, it is possible to improve the quality of the generated glass tubes and therefore of the glass products obtained from the glass tubes, especially for the use in the pharmaceutically sector.

The inventors found that the above method is easy to handle, economic, since existing apparatuses can be used to a large extent and only require a small amount of conversion, and environmentally friendly, since no additional chemicals are used in the glass melt. Furthermore, the time for drawing and further processing of the tubes is not affected.

Advantageous embodiments of the present invention are defined in the corresponding subclaims.

According to one embodiment, the metal of the metallic layer on the tube forming body and/or the metallic electrode are selected from the group consisting of molybdenum, tungsten, tantalum, tin oxide, platinum, rhodium, iridium, and alloys thereof, high melting refractory metals, oxides thereof and alloys thereof, oxide dispersion-strengthened metal compounds and alloys thereof, and heat-resistant steel, and preferably are selected from the group consisting of platinum, molybdenum, tungsten and alloys thereof and oxide dispersion-strengthened metal compounds and alloys thereof.

According to another embodiment of the present invention, the metal of the metallic layer on the tube forming body and the metallic electrode are different metals, preferably are selected from the group consisting of platinum, molybdenum, tungsten and alloys thereof as well as oxide dispersion-strengthened alloys and compounds thereof and more preferably the metal of the metallic layer on the tube forming body is platinum or platinum alloy or an oxide dispersion-strengthened platinum alloy and the metal of the metallic electrode is molybdenum or tungsten or an oxide dispersion-strengthened molybdenum or tungsten alloy.

According to another embodiment of the present invention, wherein the at least one metallic electrode is mounted in the melting vessel and/or the fining vessel and/or working tank and/or distributor, and preferably is mounted in the melting vessel.

According to another embodiment of the present invention, the glass tube forming apparatus further comprises an electronic voltage filter, that is located in series in the electrical connection between the tube forming body and the at least one electrode, and preferably the electronic voltage filter comprises a resistor, a capacitor and/or an inductance.

According to another embodiment of the present invention, the glass tube forming apparatus further comprises an electronic voltage adjustment or electronic voltage control, that is located in series in the electrical connection between the tube forming body and the at least one electrode, and preferably the electronic voltage control is a variable resistor and most preferably selected from the group consisting of rotary potentiometer and push potentiometer.

According to another embodiment of the present invention, the glass tube forming apparatus further comprises an external direct current source, that is located in series in the electrical connection between the tube forming body and the at least one electrode. According to another embodiment of the present invention, wherein the tube forming body is A) a Danner mandrel or B) is a needle and an outlet nozzle.

According to another embodiment of the present invention, the potential drop is generated at least partly by a difference of the metal of the metallic layer on the tube forming body and the metallic electrode, wherein the metals are selected from the group consisting of molybdenum, tungsten, tantalum, tin oxide, platinum, rhodium, iridium and alloys thereof, high melting refractory metals, oxides thereof and alloys thereof, oxide dispersion-strengthened metal compounds and alloys thereof, and heat-resistant steel, and preferably are selected from the group consisting of platinum, molybdenum tungsten and alloys thereof and oxide dispersion-strengthened metal compounds alloys thereof. According to another embodiment of the present invention, the direct current flows from the tube forming body to the at least one metallic electrode and preferably, the direct current density on the tube forming body is in the range from 0.05 $mA/cm^2$ to 5.0 $mA/cm^2$, preferably from 0.1 $mA/cm^2$ to 3.0 $mA/cm^2$ and most preferably in the range from 0.5 to 2.0 $mA/cm^2$.

According to another embodiment of the present invention, the inventive glass tube has an aggregated airline length of less than 0.050 m per 1.0 m tube length on the surface of the inside of the glass tube, preferably less than 0.010 m per 1.0 m tube length on the surface of the inside of the glass tube, and most preferably 0.0050 m per 1.0 m tube length on the surface of the inside of the glass tube or in the range of 0.00010 m to less than 0.10 m per 1.0 m tube length on the surface of the inside of the glass tube, preferably in the range of 0.00030 m to less than 0.050 m per 1.0 m tube length on the surface of the inside of the glass tube, preferably in the range of 0.00070 m to less than 0.010 m per 1.0 m tube length on the surface of the inside of the glass tube, and most preferably in the range of 0.0010 m to less than 0.0050 m per 1.0 m tube length on the surface of the inside of the glass tube.

According to another embodiment of the present invention, the inventive glass tube has a glass composition comprising 60 to 85 wt.-% $SiO_2$, 5 to 20 wt.-% $B_2O_3$, 1 to 10 wt.-% $Al_2O_3$, 0 to 2 wt.-% $Fe_2O_3$, 2 to 10 wt.-% $Na_2O$, 0 to 5 wt.-% $K_2O$, 0 to 2 wt.-% BaO, 0 to 2 wt.-% CaO, 0 to 10 wt.-% $TiO_2$, based on all oxides present in the glass composition. According to another embodiment of the present invention, the inventive glass tube has an outer diameter $d_o$ from 5 mm to 55 mm, preferably from 8 mm to 40 mm, more preferably from 9 mm to 35 mm, even more preferably from 10 mm to 30 mm,

and most preferably from 11 mm to 25 mm, and/or a wall thickness WT from 0.4 mm to 2.5 mm, preferably from 0.6 mm to 2.3 mm, more preferably from 0.8 mm to 2.1 mm, and most preferably from 1.0 mm to 1.8 mm, and/or an inner diameter $d_i$ from 4 to 51 mm, preferably from 6 mm to 46 mm, more preferably from 10 mm to 41 mm, even more preferably from 16 mm to 40 mm, and most preferably from 20 mm to 35 mm, and/or a length $l_a$ from 500 to 3500 mm, preferably from 800 to 3000 mm, and most preferably from or 1200 to 2000 mm.

It should be understood that for the purpose of the present invention, the following terms have the following meaning:

If this disclosure refers to a length of any element, a width of any element or a height of any element, for example, refers to a length of a glass tube $l_a$, an inner diameter $d_i$ and outer diameter $d_o$ of a glass tube and a wall thickness WT of a glass tube, it shall be understood that with reference to a Cartesian coordinate system, length always refers to a maximal extension in the x-direction, width always refers to a maximal extension in the y-direction, and height always refers to a maximal extension in the z-direction, wherein the x-direction, y-direction and z-direction are oriented pairwise perpendicular to each other. Measurement of the lengths, the width or a height can be done for example by a microscope with calibrated size scala or a light box with a lineal.

A direct current (DC) in the meaning of the present invention, sometimes also known as galvanic current is a one-directional flow of electric charge. The direct current can be measured by a multimeter.

The viscosity of the glass melt in the meaning of the present invention is a measure of its resistance to deformation at a given rate, wherein the unit of the viscosity is Pa s. Detailed definition of the viscosity of the glass melt is defined in detail in ISO 7884-1: Glass - Viscosity and viscometric fixed points, Part 1: "Principles for determining viscosity and viscometric fixed points", Edition 1998-02. Measurement methods are described in ISO 7884-2: Glass - Viscosity and viscometric fixed points, Part 2: "Determination of viscosity by rotation viscometers", Edition 1998-02.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of' is considered to be a preferred embodiment of the term "comprising". If hereinafter a group is defined to comprise at least a certain number of embodiments, this is also to be understood to disclose a group, which preferably consists only of these embodiments. Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined herein above.

According to the present invention, a glass tube forming apparatus is provided comprising a tube forming body configured to receive a flow of molten glass, wherein the molten glass is withdrawn from the forming body in form of a glass tube, and at least one metallic electrode, wherein the at least one metallic electrode is mounted in the glass melt in spaced relation to the tube forming body, wherein the tube forming body is covered at least partly with a metallic layer, and wherein the tube forming body is connected electrical with the at least one electrode. In the following, details and preferred embodiments of the inventive apparatus will be set out in more detail. It is to be understood that these technical details and embodiments also apply to the inventive methods, the inventive glass tube and the inventive use of said glass tube.

## Glass tube forming apparatus

According to one embodiment, the present invention refers to a glass tube forming apparatus comprising:

a) a tube forming body configured to receive a flow of molten glass, wherein the molten glass is withdrawn from the forming body in form of a glass tube, and
b) at least one metallic electrode, wherein the at least one metallic electrode is mounted in the glass melt in spaced relation to the tube forming body,

wherein the tube forming body is covered at least partly with a metallic layer,
and wherein the tube forming body is connected electrical with the at least one electrode.

As set out above the glass tube forming apparatus comprises a tube forming body. A "tube forming body" in the meaning of the present invention is a component that is designed and suitable for receiving a flow of molten glass and withdrawing it from the tube forming body in form of a glass tube. The term "molten glass" or "glass melt" in the context of the

present invention refers to a volume of a batch of glass raw materials that has a viscosity of less than $10^{7.6}$ dPa·s. The molten material is formulated such that with appropriate cooling, the material may form a glass, for example a silicate glass (e.g., borosilicate, alumino-borosilicate, aluminosilicate or lithium alumino-silicate (LAS) glass etc.). Generally, tube forming bodies are known to the skilled person who is familiar with glass production and especially with the production of glass tubes.

According to a preferred embodiment of the present invention, the tube forming body is A) a Danner mandrel or B) is a needle and an outlet nozzle.

In this description the terms "pipe" and "mandrel", respectively "Danner pipe" and "Danner mandrel", are synonymous. In the Danner method, which is known from US1219709, a so-called Danner mandrel is used as the tube forming body. This is a generally hollow, truncated cone shaping part often consisting of ceramic or metal material, which is arranged on a rotating carrier. The principal axis of the truncated cone shaping part is slightly tilted with respect to the horizontal. The glass melt is provided on the rotating shaping part at the upper end and it flows along the shaping part and is wound around the shaping part owing to the rotation. Due to the contact with the shaping part, the glass melt cools down. At the lower end of the shaping part, the viscous glass melt is drawn off as a so-called drawing bulb and then cooled further. The entire Danner mandrel is usually arranged in a temperature-controlled muffle furnace. For the manufacture of glass tubes, the carrier of the Danner mandrel is usually hollow in configuration and blowing air is blown in at the upper end of the carrier. The blowing air exits at the lower end of the carrier and prevents the glass melt from collapsing in the drawing bulb. The volume flow of the blowing air is slight and has a direct influence on the geometry of the resulting glass tube. Besides the blowing air, first and foremost the drawing speed of the glass melt has an influence on the geometry and especially on the outer diameter and the wall thickness of the glass tubes. A precise process control is needed here in order to uniformly produce a particular geometry. Danner mandrels are usually known in the prior art, for example from DE10048815C1, US3360353 or US3523782.

In the Vello and the down-draw method, the glass melt flows vertically downward (in the direction of gravity) through a tube forming body formed by a needle and an outlet nozzle. The tube forming body forms a negative mould (die) of the created cross section of the glass tube or glass rod. In the manufacture of glass tubes, a needle as the shaping part is normally arranged at the center of the tube forming body. Due to the contact with the needle and the outlet nozzle, the glass melt cools down. At the lower end of the needle, the viscous glass melt is drawn off as a so-called drawing bulb and then cooled further. The needle might be hollow in one configuration and blowing air is blown in at the upper end of the needle. The blowing air exits at the lower end of the needle and prevents the glass melt from collapsing in the drawing bulb. The volume flow of the blowing air is slight and has a direct influence on the geometry of the resulting glass tube. Besides the blowing air, first and foremost the drawing speed of the glass melt, and the diameter of the needle and of the outlet nozzle has an influence on the geometry and especially on the outer and inner diameter and the wall thickness of the glass tubes. A precise process control is needed here in order to uniformly produce a particular geometry. Such needles and outlet nozzles are usually known in the prior art, for example from DE10348098 A1 or from WO03018491A1.

The skilled person knows how to design or choose such a tube forming body dependent from the glass material that should be drawn and the inner and outer geometries of the glass tube.

The tube forming body can comprise or consist of any material that is suitable for preparing such tube forming bodies that are used for drawing glass tubes. Especially, the material has to be heat resistant, sufficiently dimensionally stable at the intended temperatures and relatively inert to the glass melt. Such materials are known to the skilled person, for example from US6274525B1 and are commercially available.

According to one embodiment the tube forming body comprises or consists of a ceramic material. According to a preferred embodiment the ceramic material is a ceramic composite material and preferably is a bonded material. Preferably the ceramic composite material is a casting slip material, and even more preferred is that the ceramic composite comprises $MgO\text{-}MgAl_2O_4$. The ceramic material may comprise a coating, for example a metal coating such as a coating of platinum or a platinum group metal (PGM).

According to another embodiment the tube forming body comprises or consists of a metal material. According to a preferred embodiment the metal material is a noble metal and/or an alloy thereof or a refractory metal, for example, a suitable high-temperature-resistant stainless steel, for example a nickel alloy with Mo, Cr or Co, preferably according to DIN 17744 or DIN EN 10095. Such high-temperature-resistant stainless steels are known to the skilled person and are commercially available, for example under the trade names THERMAX® or Stellite 250® or Stellite-21.

According to another embodiment the tube forming body comprises or consists of a ceramic material and a metal material. It is especially preferred that the main part, for example 80 vol% or more, of the tube forming body comprises or consists of a ceramic material and only a minor part, for example 20 vol% or less, of the tube forming body comprises or consists of a metal material. According to an especially preferred embodiment the tube forming body is a Danner mandrel and the upper part of the Danner mandrel comprises or consist of a ceramic material and the lower part of the Danner mandrel, which is also known as pipe head to the skilled person, comprises or consists of a metal material.

According to the present invention, the tube forming body is covered at least partly with a metallic layer. For example, at least 30 % of the surface of the tube forming body are covered by a metallic layer, preferably 50%, even more

preferably 70% and more preferably 90%, based on the total surface of the tube forming body. According to a preferred embodiment the surface of the tube forming body that comes into contact with the glass melt is covered with a metallic layer. According to another embodiment of the present invention, the complete surface of the tube forming body is covered with a metallic layer. The covering of the tube forming body with the metallic layer can be done, for example by spray coating, dip coating, electrochemical deposition, wrapping with a foil or sheet of metal or by placing the tube forming body in a negative form, that comprises or consists of a metal. In case the tube forming body already comprises or consists of a metal material, the metallic layer may be the same or different than the metal of the tube forming body. Preferably the metal of the metallic layer is different than the metal of the tube forming body.

According to another embodiment the metal of the metallic layer is the same than the metal of the tube forming body. In this case the metallic layer defines the surface of the tube forming body and cannot be distinguished from the metal of the tube forming body. The layer thickness of the metallic layer on the tube forming body is such that it is present on the tube forming body for the complete use of the tube forming body despite possible abrasion. According to one embodiment the layer thickness of the metallic layer on the tube forming body is at least 100 μm, preferably at least 500 μm, more preferably 1,0 mm, even more preferably 5,0 mm, even more preferably 10,0 mm and most preferably 15,0 mm. According to one embodiment the layer thickness of the metallic layer on the tube forming body is less than 50,0 cm, preferably less than 20,0 cm, more preferably less than 15,0 cm, even more preferably less than 10,0 cm, even more preferably less than 5,0 cm, and most preferably less than 3,0 cm. According to one embodiment the layer thickness of the metallic layer on the tube forming body is between 100 μm and 50,0 cm, preferably between 200 μm and 20,0 cm, more preferably between 500 μm and 15,0 cm, even more preferably between 800 μm and 10,0 cm, even more preferably between 1,0 mm and 5,0 cm and most preferably between 1,5 mm and 3,0 cm. According to an exemplified embodiment of the present invention, the layer thickness of the metallic layer on the tube forming body is about 1.0 mm.

According to one embodiment of the present invention, the metal of the metallic layer on the tube forming body is selected from the group consisting of molybdenum, tungsten, tantalum, tin oxide, platinum, rhodium, iridium, and alloys thereof, high melting refractory metals, oxides thereof and alloys thereof, oxide dispersion-strengthened metal compounds and alloys thereof, and heat-resistant steel.

In case the metal of the metallic layer on the tube forming body is tantalum, tungsten and/or molybdenum, the process of withdrawing the glass and forming the glass tube has to be done under a protective atmosphere such as nitrogen atmosphere.

According to a preferred embodiment of the present invention, the metal of the metallic layer on the tube forming body is selected from the group consisting of platinum, rhodium, iridium, and alloys thereof, high melting refractory metals, oxides thereof and alloys thereof, oxide dispersion-strengthened metal compounds and alloys thereof, and heat-resistant steel. More preferably, the metal of the metallic layer on the tube forming body is selected from the group consisting of platinum, molybdenum, tungsten and alloys thereof and oxide dispersion-strengthened metal compounds and alloys thereof. Even more preferably the metal of the metallic layer on the tube forming body is platinum or platinum alloy or an oxide dispersion-strengthened platinum alloy. Most preferably the metal of the metallic layer on the tube forming body is an alloy of platinum with iridium or rhodium or is an oxide dispersion-strengthened platinum compound or an oxide dispersion-strengthened platinum-rhodium or platinum-iridium alloy.

Molybdenum (Mo), tungsten (W), tantalum (Ta), platinum (Pt), rhodium (Rh) and iridium (Ir), are metals and are commercially available. If the description refers to the metal itself, this means that the compound is in the elemental state and does not comprise any further compounds and, therefore is essentially free of further components. It should be noted that if this description refers to a metal which is essentially free of a component or does not contain a certain component or includes the hypothetical case of 0 weight% of that component, it is to be understood that this component may at most be present as an impurity. This means that it is not added in significant quantities and that it is not added intentionally. The term "component" refers to the elemental species as such as well as any molecule containing the element. Non-essential amounts are to be understood as less than 100 ppm, preferably less than 50 ppm, and most preferably less than 10 ppm, based on the weight percentage with respect to all intentionally added components.

Alloys of molybdenum, tungsten, tantalum, tin oxide, platinum, rhodium and/or iridium are alloys that comprise at least one of the forementioned in an amount of at least 50 mol.-% based on the total amount of the alloy. However, the alloy might comprise further compounds such as rhenium or copper or ruthenium. Known alloys are, for example, molybdenum-rhenium alloys, molybdenum-copper alloys, tungsten-carbide, tungsten-rhenium alloys, tantalum-niobium alloys, tantalum-hafnium alloys, platinum-rhodium alloys, platinum-iridium alloys, iridium-ruthenium alloys and are commercially available. Especially platinum-1-iridium alloys or platinum-6-rhodium-alloys and platinum-10-rhodium-alloys are known to the skilled person and commercially available.

High melting refractory metals are metals that have a melting point above 2000°C and a high hardness at room temperature. Known high melting refractory metals are niobium, molybdenum, tantalum, tungsten and rhenium. Oxides of high melting refractory metals such as niobium, molybdenum, tantalum, tungsten and rhenium are compounds of these metals and oxygen. Such oxides are niobium oxides such as niobium pentoxide ($Nb_2O_5$), molybdenium oxides such as molybdenum trioxide (MoOs), tantalum oxides such as tantalum pentoxide ($Ta_2O_5$), tungsten oxides such as tungsten

trioxide ($WO_3$) or rhenium oxides such as rhenium oxide ($ReO_3$), which are commercially available. Alloys of high melting refractory metals are alloys that comprise at least one high melting refractory metal in an amount of at least 50 mol.-% based on the total amount of the alloy. However, the alloy might comprise further compounds. Known alloys of high melting refractory metals are, for example, molybdenum-rhenium alloys, molybdenum-copper alloys, tungsten-carbide, tungsten-rhenium alloys, tantalum-niobium alloys, tantalum-hafnium alloys and are commercially available.

Oxide dispersion-strengthened metal compounds and alloys thereof are compounds that comprise fine oxide particles distributed within the metal or metal alloy matrix. Preferably the fine oxide particles, for example yttrium oxide particles ($Y_2O_3$) are distributed within the metal or metal alloy matrix mainly on the grain boundaries. Preferably the oxide dispersion-strengthened metal compounds are oxide dispersion-strengthened platinum compounds or oxide dispersion-strengthened zirconium compounds. Oxide dispersion-strengthened platinum compounds are known to the skilled person and commercially available, for example, from Heraeus under the trade name DPH. Oxide dispersion-strengthened zirconium compounds are known from US3775823A.

Heat-resistant steel is a type of steel designed to withstand high temperatures without losing its mechanical properties and is known to the skilled person and commercially available. Preferably a heat-resistant stainless steel is used, for example a nickel alloy with Mo, Cr or Co, preferably according to DIN 17744 or DIN EN 10095. Such high-temperature-resistant stainless steels are known to the skilled person and are commercially available, for example, under the trade name THERMAX® or Stellite 250® or Stellite-21.

The glass tube forming apparatus according to the present invention comprises at least one metallic electrode, wherein the at least one metallic electrode is mounted in the glass melt in spaced relation to the tube forming body. At least one metallic electrode in the meaning of the present invention means that the glass tube forming apparatus comprises one or more electrodes, for example one, or two, or three, or six, or eight, or more electrodes. According to a preferred embodiment, the glass tube forming apparatus according to the present invention comprises between one to eighty metallic electrodes, for example between 5 to 30 metallic electrodes or between 40 to 60 metallic electrodes. The metallic electrodes of the glass tube forming apparatus might be installed in the glass melt merely for the inventive glass tube forming apparatus. Alternatively, metallic electrodes might be used that are already present in the glass melt, for example, heating electrodes, that are used for melting the glass raw materials or heating the glass melt. According to one embodiment of the present invention, the at least one metallic electrode is mounted in the melting vessel and/or the fining vessel and/or working tank and/or distributor. According to a preferred embodiment of the present invention, the at least one metallic electrode is mounted in the melting vessel.

In case more than one metallic electrode is present in the tube forming apparatus, all the metallic electrodes are present in the same part, or in different parts. For example, if two or more metallic electrodes are present in the tube forming apparatus, all the metallic electrodes are present in one part, for example all the metallic electrodes are present in the melting vessel or in the working tank. Alternatively, if two or more metallic electrodes are present in the tube forming apparatus, the metallic electrodes are in different parts, for example, some of the metallic electrodes are present in the melting vessel and some of the metallic electrodes are present in the fining vessel.

According to the most preferred embodiment of the present invention, the at least one metallic electrode is mounted in the melting vessel. This is especially preferred since in that case the ions that might migrate from the at least one electrode into the glass melt in the melting vessel might be oxidized/reduced or chemically reacted in the glass melt and might no longer be detectable in the obtained product.

According to one embodiment of the present invention, the metal of the at least one metallic electrode is selected from the group consisting of molybdenum, tungsten, tantalum, tin oxide, platinum, rhodium, iridium, and alloys thereof, high melting refractory metals, oxides thereof and alloys thereof, oxide dispersion-strengthened metal compounds and alloys thereof, and heat-resistant steel, and preferably is selected from the group consisting of platinum, molybdenum, tungsten and alloys thereof and oxide dispersion-strengthened metal compounds and alloys thereof and most preferably, is molybdenum or tungsten or an oxide dispersion-strengthened molybdenum or tungsten alloy.

The metallic layer on the tube forming body and the metallic electrode may be the same or may be different metals. According to a preferred embodiment the metallic layer on the tube forming body and the metallic electrode are different metals. According to a preferred embodiment, the metal of the metallic layer on the tube forming body and the metallic electrode are different metals and are selected from the group consisting of platinum, molybdenum, tungsten and alloys thereof as well as oxide dispersion-strengthened alloys and compounds thereof and more preferably the metal of the metallic layer on the tube forming body is platinum or platinum alloy or an oxide dispersion-strengthened platinum alloy and the metal of the metallic electrode is molybdenum or tungsten or an oxide dispersion-strengthened molybdenum or tungsten alloy.

According to the tube forming apparatus of the present invention, the tube forming body is connected electrical with the at least one electrode.

An "electrical connection" in the meaning of the present invention is a device that connects directly or via other components the tube forming body with the at least one electrode such that an electric current can flow. The electrical connection can be any device that can conduct electricity in a suitable amount. For example, the electrical connection can

be a wire, a cable, conductive tape, or any other metallic device that is suitable for conducting electricity. In a preferred embodiment the electrical connection is a wire or a cable, and preferably the wire or cable are isolated on the outside by an insulator such as, for example, PVC, rubber, PE or PTFE.

The electrical connection can be one connection or more connections. According to a preferred embodiment the electrical connection is merely one connection, for example, one wire or cable, that connects the tube forming body with the at least one electrode. Alternatively, the electrical connection are more than one connection, that are arranged parallel or in series, and preferably parallel, to connect the tube forming body with the at least one electrode. Such electrical connections like wire or cable are known to the skilled person and commercially available. According to a preferred embodiment a standard commercial cable or wire with a cross-section of 1 to 4 mm is used.

The electrical connection is designed such that a direct current in a suitable amount can flow. A direct current (DC) in the meaning of the present invention, sometimes also known as galvanic current is one-directional flow of electric charge. The electric current flows in a constant direction, distinguishing it from alternating current (AC). In the present invention, the electrons flow in the electrical connection between the metallic electrode and the tube forming body from the metallic electrode to the tube forming body. Therefore, a positive electric current flows in opposite direction to the electrons, i.e. within the electrical connection from the tube forming body to the at least one metallic electrode.

In addition to the above-mentioned components, the inventive glass tube forming apparatus might comprise further optional components.

According to one embodiment of the present invention, the glass tube forming apparatus further comprises an electronic voltage filter. The electronic voltage filter might be located in series in the electrical connection between the tube forming body and the at least one electrode. An "electronic voltage filter" in the meaning of the present invention is a device that can filter or block unwanted frequencies from the applied signal, can enhance unwanted ones or both.

According to one preferred embodiment, the electronic voltage filter is a filter, that converts alternating current (AC) that might flow through the electrical connection between the tube forming body to the at least one metallic electrode to direct current (DC). According to another preferred embodiment the electronic voltage filter is a high pass electronic filter that passes signals with a frequency higher than a certain cutoff frequency and attenuates signals with frequencies lower than the cutoff frequency. For example, such a high pass electronic filter might only pass frequencies that are higher than a cutoff frequency of 60 Hz, or 70 Hz, or 120 Hz. According to another preferred embodiment the electronic voltage filter is a low pass electronic filter that passes signals with a frequency lower than a selected cutoff frequency and attenuates signals with frequencies higher than the cutoff frequency. For example, such a low pass electronic filter might only pass frequencies that are lower than a cutoff frequency of 40 Hz, or 55 Hz, or 100 Hz. According to another preferred embodiment the electronic voltage filter is a band-stop filter or band-rejection filter that passes most frequencies unaltered but attenuates those in a specific range to very low levels. For example, such a band-stop filter attenuates frequencies in the range of about 50 Hz, or 60 Hz, or 110 Hz, especially in the range of 45 Hz to 55 Hz, or 55 Hz to 65 Hz, or 105 Hz to 115 Hz to very low levels and preferably to zero.

One or more electronic voltage filters might be used in the glass tube forming apparatus. For example, one electronic voltage filter is a filter, that converts alternating current (AC) to direct current (DC) and another electronic voltage filter is a band-stop filter, preferably a band-stop filter that attenuates frequencies in the range of about 50 Hz. Such filters might be arranged parallel or in series and preferably are arranged in series.

Electronic voltage filters are known to the skilled person and are commercially available. For example, the electronic voltage filter comprises or consists of a resistor, a capacitor and/or an inductance. A resistor in the meaning of the present invention is a passive two-terminal electrical component that implements electrical resistance as a circuit element. A capacitor in the meaning of the present invention is a device that stores electrical energy by accumulating electric charges on two closely spaced surfaces that are insulated from each other. An inductance in the meaning of the present invention is an electrical conductor such as a wire in the shape of a coil.

According to another embodiment of the present invention, the glass tube forming apparatus further comprises an electronic voltage adjustment or electronic voltage control. The electronic voltage adjustment or electronic voltage control can be located in series in the electrical connection between the tube forming body and the at least one electrode. An electronic voltage adjustment in the meaning of the present invention is a device, that sets the voltage to a defined value which cannot be amended. An electronic voltage control in the meaning of the present invention is a device, that can be used to regulate the voltage to obtain a variable voltage in output. Electronic voltage adjustments and electronic voltage controls are known to the skilled person and are commercially available.

According to a preferred embodiment an electronic voltage control is located in series in the electrical connection between the tube forming body and the at least one electrode, which is preferably a variable resistor. A variable resistor in the meaning of the present invention is an electronic component that allows to control the flow of voltage by changing the amount of resistance. Preferably the electronic voltage control is selected from the group consisting of a rotary potentiometer and push potentiometer. A rotary potentiometer in the meaning of the present invention is a variable resistor that can be moved by means of a rotary motion. A push potentiometer in the meaning of a present invention is a potentiometer that is attached on top of a switch and can be turned "on" or "off" by operating the switch. According to an

exemplified embodiment, the electronic voltage control is a rotary potentiometer.

According to another embodiment of the present invention, the glass tube forming apparatus further comprises an external direct current source. The external direct current source can be located in series in the electrical connection between the tube forming body and the at least one electrode. An external direct current source in the meaning of the present invention is a current source that is connected externally and provides a further direct current in addition to the currents(s) that are already present in the system. Such direct current sources are known to the skilled person and are commercially available.

The inventive glass tube forming apparatus might comprise only one optional component, or more components, for example, two or three further components.

A main difference between the inventive form tubing apparatus and apparatuses already known is that there is no contact or connection of the tube forming body with the remaining components that are used for melting and withdrawing glass, such as the glass tank or the stirrer within that tank or the melting vessel or the melting channel, apart from the contact via the electrical connection with the metallic electrode. Rather, the connection between these two components is only created by the liquid glass melt, which can conduct electricity.

## Method

According to one aspect of the present invention, a method for reducing the amount of gas bubbles on the contact surface of a glass tube is provided.

A "bubble" or "gas bubble" in the meaning of the present invention is a gaseous inclusion within the glass or the glass melt of at least 10 μm, wherein the size or size range refers to the diameter of a sphere with a volume equivalent that of the gaseous inclusion, respectively the bubble. The "diameter" means the largest diameter of the gaseous inclusion. Whenever in this description reference is made to "bubble" it can be understood as gas bubble in its broadest meaning. The gas in the gas bubble is mainly oxygen (Oz) that forms, for example, through the decomposition of water or the splitting of OH groups bound to individual melt components and their decomposition as described above. The gas bubble comprises at least 90 vol% of oxygen based on the total volume of the gas bubble, preferably 98 vol% of oxygen based on the total volume of the gas bubble and most preferably consists only of oxygen. The number of bubbles can be detected, for example, simply by visual inspection and counting by quality personal. Alternatively, the number of bubbles can be detected by an online inspection system, for example by a camera and a visual counting software.

The method for reducing the amount of gas bubbles on the contact surface of a glass tube comprises the steps of

i) providing a tube forming body, configured to receive a flow of molten glass, wherein the tube forming body is covered at least partly with a metallic layer, and

ii) providing at least one metallic electrode, wherein the at least one metallic electrode is mounted in the glass melt in spaced relation to the tube forming body,

iii) providing an electrical connection between the tube forming body and the at least one electrode,

iv) generating a potential drop between the tube forming body and the at least one electrode to cause a direct current and

v) withdrawing the molten glass from the tube forming body in form of a glass tube during the direct current flows between the tube forming body and the at least one electrode.

Steps i), ii) and iii) have already been described in detail above for the glass tube forming apparatus. It is to be understood that these technical details and embodiments also apply to the inventive methods.

According to step iv) a potential drop is generated between the tube forming body and the at least one electrode to cause a direct current.

According to one embodiment, the potential drop is generated at least partly by a difference of the metal of the metallic layer on the tube forming body and the metallic electrode. The possible metals of the metallic layer on the tube forming body and the metallic electrode have already been described in detail above and preferably are selected from the group consisting of molybdenum, tungsten, tantalum, tin oxide, platinum, rhodium, iridium and alloys thereof, high melting refractory metals, oxides thereof and alloys thereof, oxide dispersion-strengthened metal compounds and alloys thereof, and heat-resistant steel, and most preferably are selected from the group consisting of platinum, molybdenum tungsten and alloys thereof and oxide dispersion-strengthened metal compounds alloys thereof.

According to another embodiment of the present invention, the potential drop is generated at least partly by a temperature difference between the temperature of the glass melt on the tube forming body and the temperature of the glass melt at the position of the at least one metallic electrode. For example, the at least one metallic electrode is mounted in the melting vessel and/or the fining vessel and/or working tank and/or distributor, and preferably is mounted in the melting vessel. The glass melt in the melting vessel and/or the fining vessel might have a temperature in the range of 1500 to 1650 °C, and/or the glass melt in the working tank and/or distributor might have a temperature in the range of 1450 to

1550 °C and/or the glass melt on the tube forming body might have a temperature in the range of 900 to 1250 °C. Therefore, the temperature difference between the glass melt on the tube forming body and the temperature of the glass melt at the position of the at least one metallic electrode is at least 50°C, preferably at least 100°C more preferably at last 150°C and most preferably at least 180°C or the temperature difference is in the range of 50°C to 450°C, preferably 100°C to 400°C, more preferably 150°C to 350°C and most preferably 180°C to 250°C.

According to another embodiment of the present invention, the potential drop is generated at least partly by an external direct current source, that is located in series in the electrical connection between the tube forming body and the at least one electrode. According to a preferred embodiment of the present invention, the external direct current has an amount of 5.0 V or less, preferably 2.0 V or less, even more preferably 1.0 V or less, and most preferably 0.50 V or less. According to another preferred embodiment of the present invention, the external direct current has an amount of between more than 0 V to 5.0 V or less, preferably between 10 mV and 2.0 V, even more preferably between 50 mV and 1.0 V and most preferably between 100 mV and 500 mV, for example about 120 mV, or about 130 mV or about 160 mV or about 200 mV or about 210 mV or about 260 mV.

The potential drop can be generated only by one or more measures. According to one preferred embodiment, the potential drop is generated only by a difference of the metal of the metallic layer on the tube forming body and the metallic electrode. According to another embodiment the potential drop is generated only by a temperature difference between the temperature of the glass melt on the tube forming body and the temperature of the glass melt at the position of the at least one metallic electrode. According to another embodiment the potential drop is generated only by an external direct current source, that is located in series in the electrical connection between the tube forming body and the at least one electrode. According to a preferred embodiment of the present invention the potential drop is generated by a combination of two measures, namely by a difference of the metal of the metallic layer on the tube forming body and the metallic electrode and by a temperature difference between the temperature of the glass melt on the tube forming body and the temperature of the glass melt at the position of the at least one metallic electrode. Alternatively, the potential drop is generated by a combination of a difference of the metal of the metallic layer on the tube forming body and the metallic electrode and an external direct current source, that is located in series in the electrical connection between the tube forming body and the at least one electrode. Alternatively, the potential drop is generated by a combination of a temperature difference between the temperature of the glass melt on the tube forming body and the temperature of the glass melt at the position of the at least one metallic electrode and an external direct current source, that is located in series in the electrical connection between the tube forming body and the at least one electrode. Alternatively, the potential drop is generated by all three measures described above.

Due to the potential drop between the tube forming body and the at least one electrode a direct current is caused to flow. As already set out above, a direct current (DC) in the meaning of the present invention, sometimes also known as galvanic current is one-directional flow of electric charge. The electric current flows in a constant direction, distinguishing it from alternating current (AC). In the present invention, the electrons flow in the electrical connection between the metallic electrode and the tube forming body from the metallic electrode to the tube forming body. Therefore, a positive electric current flows in opposite direction to the electrons, i.e. within the electrical connection from the tube forming body to the at least one metallic electrode.

According to a preferred embodiment of the present invention, the direct current flows from the tube forming body to the at least one metallic electrode and the direct current density on the tube forming body is in the range from 0.05 $mA/cm^2$ to 5.0 $mA/cm^2$, preferably from 0.1 $mA/cm^2$ to 3.0 $mA/cm^2$ and most preferably in the range from 0.5 to 2.0 $mA/cm^2$. The direct current density (j) in the meaning of the present invention is defined by the formula

$$j=I/A$$

wherein I is the direct current in the glass melt on the tube forming body and A is defined by the formula

$$A = \pi \cdot d_{tube\ forming\ body} \cdot L$$

wherein $d_{tube\ forming\ body}$ is the diameter of the tube forming body that is covered with the metallic layer and L is the section on the tube forming body wherein the molten glass occurs on the tube forming body to where the temperature in the glass melt on the tube forming body is such that the viscosity of the glass is below the so-called softening point of $10^{7.6}$ d·Pas.

According to step v) the molten glass is withdrawn from the tube forming body in form of a glass tube during the direct current flows between the tube forming body and the at least one electrode. Withdrawing of molten glass from the tube forming body in form of a glass tube is a known process and the skilled person knows how to adjust the parameters such as temperature, drawing speed, rotation of the glass tube, etc.

The inventors surprisingly found that by the above-described inventive apparatus and method it is possible to reduce or even avoid the gas bubble formation, especially the formation of oxygen-containing bubbles, on the contact

surface of a glass tube. Without being bound to any theory it is believed that due to the generation of the potential drop between the tube forming body and the at least one electrode a direct current is caused that flows between the tube forming body and the at least one electrode. That direct current has a direct influence on the oxygen partial pressure in the glass melt, especially on the glass melt at the point of the tube forming body as can be seen from the below reaction.

$$2\,O^{2-} \rightleftharpoons O_2 + 4e^-$$

The oxygen partial pressure can be measured directly in the glass melt. This kind of measurement is known and performed, for example, with probes as described by Th. Frey and F. G. K. Baucke, et al, in Glastechn. Ber. 53, pp. 116-123 (1980). It is believed that the direct current that flows between the tube forming body and the at least one electrode leads to a shift of the above reaction scheme to the left side and, therefore, to a reduction of the oxygen partial pressure in the glass melt at the tube forming body. The inventors believe that due to that reduction of the oxygen partial pressure the amount of gas bubbles in the glass melt at the tube forming body and, therefore, also on the contact surface of a glass tube is reduced.

According to one embodiment of the present invention, the oxygen partial pressure in the glass melt on the tube forming body is less than 1.0 bar, preferably less than 0.8 bar and most preferably less than 0.5 bar. According to another embodiment of the present invention, the oxygen partial pressure in the glass melt on the tube forming body is between 0.01 bar to less than 1.0 bar, preferably between 0.05 bar to less than 0.8 bar and most preferably between 0.1 bar to less than 0.5 bar.

By the inventive method according to the present invention it is possible to reduce the amount of gas bubbles in the molten glass on the tube forming body and, therefore, on the contact surface of a glass tube.

According to one embodiment of the present invention, the glass tube or glass melt on the tube forming body has less than 80 bubbles in a size range of from 0.1 mm to 0.3 mm per 10 kg of glass and/or less than 2 bubbles of a size larger than 0.3 mm per 10 kg of glass. According to one embodiment, the glass tube or glass melt on the tube forming body has less than 80 bubbles, less than 60 bubbles, less than 40 bubbles, or less than 20 bubbles, in a size range of from 0.1 mm to 0.3 mm per 10 kg of glass. In one embodiment, the glass tube or glass melt on the tube forming body has 0 bubbles, at least 2 bubbles, at least 5 bubbles, or at least 10 bubbles, in a size range of from 0.1 mm to 0.3 mm per 10 kg of glass. In one embodiment, the glass tube or glass melt on the tube forming body has 0 to 80 bubbles, 2 to 60 bubbles, 3 to 40 bubbles, 4 to 20 or 5 to 15 bubbles, in a size range of from 0.1 mm to 0.3 mm per 10 kg of glass. The indication of a number of bubbles per 10 kg of glass does not mean that the glass product must have a mass of at least 10 kg. Thus, the number of bubbles per mass unit may be measured in smaller samples as well, e.g. a sample of 1 kg or 100 g.

In one embodiment, the glass tube or glass melt on the tube forming body has less than 2 bubbles of a size larger than 0.3 mm per 10 kg of glass, or 0 bubbles of a size larger than 0.3 mm per 10 kg of glass. In one embodiment, the glass tube or glass melt on the tube forming body has 0 to 80 bubbles, 2 to 60 bubbles, 3 to 40 bubbles, 4 to 20 or 5 to 15 bubbles, in a size range of from 0.1 mm to 0.3 mm per 10 kg of glass and less than 2 bubbles of a size larger than 0.3 mm per 10 kg of glass.

In one embodiment, the glass tube or glass melt on the tube forming body has 0 to 80 bubbles, 2 to 60 bubbles, 3 to 40 bubbles, 4 to 20 or 5 to 15 bubbles, in a size range of from 0.1 mm to 0.3 mm per 10 kg of glass and 0 bubbles of a size larger than 0.3 mm per 10 kg of glass. This is especially advantageous since due to the reduced oxygen bubble formation on the surface of a glass tube, it is possible to produce glass tubes with a reduced amount of aggregated airline length, especially with an aggregated airline length of less than 0.10 m per 1.0 m tube length on the contact surface of the glass tube as described below.

Additionally, or alternatively, the glass tube or glass melt on the tube forming body has less than 80 bubbles in a size range of from 0.01 mm to below 0.3 mm per 10 kg of glass. According to one embodiment, the glass tube or glass melt on the tube forming body has less than 80 bubbles, less than 60 bubbles, less than 40 bubbles, or less than 20 bubbles, in a size range of from 0.01 mm to below 0.3 mm per 10 kg of glass. In one embodiment, the glass tube or glass melt on the tube forming body has 0 bubbles, at least 2 bubbles, at least 5 bubbles, or at least 10 bubbles, in a size range of from 0.01 mm to below 0.3 mm per 10 kg of glass. In one embodiment, the glass tube or glass melt on the tube forming body has 0 to 80 bubbles, 2 to 60 bubbles, 3 to 40 bubbles, 4 to 20 or 5 to 15 bubbles, in a size range of from 0.01 mm to below 0.3 mm per 10 kg of glass. The indication of a number of bubbles per 10 kg of glass does not mean that the glass product must have a mass of at least 10 kg. Thus, the number of bubbles per mass unit may be measured in smaller samples as well, e.g. a sample of 1 kg or 100 g. One advantage of the above method and apparatus is that it is easy to handle, economic, since existing apparatuses can be used to a large extent and only require a small amount of conversion, and environmentally friendly, since no additional chemicals are used in the glass melt. Furthermore, the time for drawing and further processing of the tubes is not affected.

## Glass tube and applications

According to a further aspect of the present invention a glass tube obtainable by the method according to the present invention is provided. Especially, a glass tube is provided by the method comprising the steps of

i) providing a tube forming body, configured to receive a flow of molten glass, wherein the tube forming body is covered at least partly with a metallic layer, and
ii) providing at least one metallic electrode, wherein the at least one metallic electrode is mounted in the glass melt in spaced relation to the tube forming body,
iii) providing an electrical connection between the tube forming body and the at least one electrode,
iv) generating a potential drop between the tube forming body and the at least one electrode to cause a direct current and
v) withdrawing the molten glass from the tube forming body in form of a glass tube during the direct current flows between the tube forming body and the at least one electrode.

According to one embodiment of the present invention a glass tube having an aggregated airline length of less than 0.10 m per 1.0 m tube length on the contact surface of the glass tube is provided, wherein the aggregated airline length is defined as the sum of the lengths of closed airlines having a length > 15 mm and open airlines having a length > 2 mm.

The contact surface in the meaning of the present invention is the surface of the glass tube that has been in direct contact with the metal on the tube forming body. The surface of the glass tube in the meaning of the present invention is the volume of the glass tube below the interface of the glass tube with the surrounding up to 0.3 mm deep into the glass tube. In case the thickness of the glass tube is less than 0.6 mm the contact surface of the glass tube refers to the complete glass volume of the glass tube.

The unit "m per 1 m tube length" of the aggregated airline length does not mean that the glass tubes have a length of 1 m or above. They may have any desired length. The aggregated airline length can be determined for a tube of a given length and then be recalculated to a length of 1 m.

While the inventive method reduces the amount of gas bubbles on the contact surface of a glass tube, a small volume of gas bubbles may still remain in the glass and finally end up in the glass tubes. During the drawing process, these bubbles are stretched and form open or closed airlines. "Open airlines" in the meaning of the present invention are airlines that are not closed to the surrounding area and, therefore, have rather the shape of an incision. "Closed airlines" in the meaning of the present invention are airlines where the gas bubbles have not been opened to the surrounding during the drawing process.

Bubbles and airlines can be detected in the glass by visual inspection, in particular automated visual inspection. The aggregated airline length is the total length of all the airlines within a certain length of the glass tube meeting certain dimensional criteria. Within this disclosure, all closed airlines having a length > 15 mm and all open airlines having a length > 2 mm are counted for the aggregated airline length. When working according to this disclosure, a particularly low value of the aggregated airline length can be achieved which is a sign of a high-quality glass product.

According to a preferred embodiment of the present invention, the glass tube has an aggregated airline length of less than 0.050 m per 1.0 m tube length on the surface of the inside of the glass tube, preferably less than 0.010 m per 1.0 m tube length on the surface of the inside of the glass tube, and most preferably 0.0050 m per 1.0 m tube length on the surface of the inside of the glass tube. According to another preferred embodiment of the present invention, the glass tube has an aggregated airline length in the range of 0.00010 m to less than 0.10 m per 1.0 m tube length on the surface of the inside of the glass tube, preferably in the range of 0.00030 m to less than 0.050 m per 1.0 m tube length on the surface of the inside of the glass tube, preferably in the range of 0.00070 m to less than 0.010 m per 1.0 m tube length on the surface of the inside of the glass tube, and most preferably in the range of 0.0010 m to less than 0.0050 m per 1.0 m tube length on the surface of the inside of the glass tube.

Alternatively, the aggregated airline length can be recalculated for a length of 10 m. For example, the glass tube according to the present invention has an aggregated airline length of less than 1.0 m per 10.0 m tube length on the contact surface of the glass tube, preferably of less than 0.50 m per 10.0 m tube length on the surface of the inside of the glass tube, preferably less than 0.10 m per 10.0 m tube length on the surface of the inside of the glass tube, and most preferably 0.050 m per 10.0 m tube length on the surface of the inside of the glass tube or less than 0.010 m per 10.0 m tube length on the surface of the inside of the glass tube. According to another preferred embodiment of the present invention, the glass tube has an aggregated airline length in the range of 0.0010 m to less than 1.0 m per 10.0 m tube length on the surface of the inside of the glass tube, preferably in the range of 0.0030 m to less than 0.50 m per 10.0 m tube length on the surface of the inside of the glass tube, preferably in the range of 0.0070 m to less than 0.10 m per 10.0 m tube length on the surface of the inside of the glass tube, and most preferably in the range of 0.010 m to less than 0.050 m per 10.0 m tube length on the surface of the inside of the glass tube or in the range of 0.0010 m to less than 0.010 m per 10.0 m tube length on the surface of the inside of the glass tube.

The aggregated airline length can be detected, for example, simply by visual inspection and measuring with a suitable scale by quality personal. Alternatively, the aggregated airline length can be detected by an online inspection system, for example by a camera and a visual measuring software.

Within the present disclosure, the glass tube has an inner surface and an outer surface. The "inner surface of the glass tube" in the meaning of the present invention is the surface on the inside of the glass tube. The "outer surface of the glass tube" in the meaning of the present invention is the surface on the outside of the glass tube. The edges of the glass tube do not count to the surface of the glass tube.

The glass tube can be characterized by an inner diameter $d_i$, an outer diameter $d_o$, a wall thickness WT and a length $l_a$ along its longitudinal axis.

According to one embodiment, the glass tube may have an outer diameter $d_o$ from 5 mm to 55 mm, preferably from 8 mm to 40 mm, more preferably from 9 mm to 35 mm, even more preferably from 10 mm to 30 mm, and most preferably from 11 mm to 25 mm. Additionally, or alternatively, the glass tube may have an inner diameter $d_i$ from 4 mm to 51 mm, preferably from 6 mm to 46 mm, more preferably from 10 mm to 41 mm, even more preferably from 16 mm to 40 mm, and most preferably from 20 mm to 35 mm. Alternatively, the glass tube might have an inner diameter $d_i$ of 0 mm. Such glass tubes are also known as glass rods. In that case the "inner surface of the glass tube" is collapsed and forms the so-called "central core" of the glass.

Additionally, or alternatively, the glass tube may have a wall thickness WT from 0.4 mm to 2.5 mm, preferably from 0.6 mm to 2.3 mm, more preferably from 0.8 mm to 2.1 mm, and most preferably from 1.0 mm to 1.8 mm.

Additionally, or alternatively, the glass tube may have a length $l_a$ from 500 to 3500 mm, preferably from 800 to 3000 mm, and most preferably from or 1200 to 2000 mm. According to a preferred embodiment of the present invention, the glass tube may have an outer diameter $d_o$ from 5 mm to 55 mm, an inner diameter $d_i$ from 4 to 51 mm, and a length $l_a$ from 500 to 3500 mm. According to another preferred embodiment the glass tube may have an outer diameter $d_o$ from 5 mm to 55 mm, an inner diameter $d_i$ from 4 to 51 mm, and a length $l_a$ from 500 to 3500 mm and a wall thickness WT from 0.4 mm to 2.5 mm.

According to an exemplary embodiment, the glass tube may have an outer diameter $d_o$ of 6.85 mm and an inner diameter $d_i$ of 4.65 mm, or an outer diameter $d_o$ of 8.15 mm and an inner diameter $d_i$ of 6.35 mm, or an outer diameter $d_o$ of 8.65 mm and an inner diameter $d_i$ of 6.85 mm, or an outer diameter $d_o$ of 10.85 mm and an inner diameter $d_i$ of 8.65 mm, or an outer diameter $d_o$ of 10.95 mm and an inner diameter $d_i$ of 9.25 mm, or an outer diameter $d_o$ of 11.60 mm and an inner diameter $d_i$ of 9.65 mm, or an outer diameter $d_o$ of 14.00 mm and an inner diameter $d_i$ of 12.00 mm, or an outer diameter $d_o$ of 14.45 mm and an inner diameter $d_i$ of 11.85 mm, or an outer diameter $d_o$ of 17.05 mm and an inner diameter $d_i$ of 14.25 mm, or an outer diameter $d_o$ of 18.25 mm and an inner diameter $d_i$ of 16.05 mm, or an outer diameter $d_o$ of 22.05 mm and an inner diameter $d_i$ of 19.05 mm.

The skilled person knows how to measure the outside diameter, the inside diameter, the wall thickness and the length of the glass tubes and selects suitable measuring equipment depending on the type and size of the object to be measured and on the accuracy with which the object and thus also the tolerance are to be determined. Such measuring equipment is commercially available, e.g. micrometers, calipers or two-point probe heads, or optical measuring instruments, e.g. digital measuring projectors. Digital measuring projectors are available from companies such as Keyence.

Any glass composition that might be used in a Danner or Vello or Down-draw method might be used for preparing the glass tubes of the present invention. Especially, the glass composition may be borosilicate, alumino-borosilicate, aluminosilicate or lithium aluminosilicate (LAS) glass composition.

Where reference is made to "glass composition", it is to be understood as the oxide composition of the glass after melting the batch of glass raw materials and solidifying the melt to obtain the glass tube. This means that any volatile components are in the gaseous state and that the metals and metalloids are present in the glass compositions as oxides and/or fluorides and/or chlorides. In other words, the "glass composition" is the combination of oxides and/or fluorides and/or chlorides that can be obtained by melting a glass tube.

A "glass melt" is a mixture of glass raw materials that have already been transformed into a glass that has a viscosity of less than $10^{7.6}$ dPas. The viscosity can for example be measured using a rotational viscosimeter, e.g. as described in DIN ISO 7884-2:1998-2. The dependence of the viscosity on the temperature is described according to the VFT equation (Vogel-Fulcher-Tammann).

"Glass raw materials" shall be understood as any chemical component that is suitable, in combination with other similar components, to form a glass melt and, optionally after reactions have taken place in the glass melt, a glass product. Examples of glass raw materials used in the context of the invention include, but are not limited to, the oxides of metals and metalloids, the nitrates of metals and metalloids, and the carbonates of metals and metalloids.

When reference is made to the "wt.-%" in this context, this should be understood as weight percent based on the total weight of the glass composition if not indicated otherwise.

If this description refers to a glass composition which is essentially free of a component or does not contain a certain component or includes the hypothetical case of 0 weight% of that component, it is to be understood that this component may at most be present as an impurity. This means that it is not added in significant quantities and that it is not

added intentionally. The term "component" refers to the elemental species as such as well as any molecule containing the element. Non-essential amounts are to be understood as less than 100 ppm, preferably less than 50 ppm, and most preferably less than 10 ppm, based on the weight percentage with respect to all intentionally added components.

Where reference is made to "ppm" in the context of solids or liquids, this should be understood as 'weight/weight' (w/w). Where reference is made to "ppm" in the context of gases, this should be understood as 'volume/volume' (vol/vol).

The glass composition may contain alkali metal oxides, such as e.g. LizO, $Na_2O$, and $K_2O$, in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1% by weight.

The glass composition may contain alkaline earth metal oxides, such as e.g. MgO, CaO, SrO, BaO, in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight.

The glass composition may contain SiOz in an amount of at least 48 % by weight, at least 55 % by weight, at least 65 % by weight, at least 70 % by weight or at least 75 % by weight. Optionally, the amount of $SiO_2$ may range up to 90% by weight, up to 87.5% by weight, up to 85% by weight, up to 82.5% by weight, or up to 80% by weight. Optionally, the glass composition may be that of a glass ceramic, i.e., a glass composition that can be further processed into a glass ceramic by appropriate heat treatment. In case that the glass composition is that of a glass ceramic, the composition may contain nucleating agents such as $TiO_2$ and/or $ZrO_2$. Optionally, the total amount of $TiO_2$ and/or $ZrO_2$ may be at least 2.0 % by weight, such as at least 2.5 % by weight. Optionally, the total amount of $TiO_2$ and/or $ZrO_2$ may be less than 7.0% by weight, or less than 5.0% by weight. The glass composition may for example be a lithium aluminosilicate glass composition, e.g., containing at least 2.0 % by weight of LizO.

The glass composition may include one or more fining agents. The fining agent may be selected from multivalent metal oxides, halides, sulfates and combinations thereof. In an embodiment, the fining agent is selected from the list of arsenic oxide, antimony oxide, tin oxide, cerium oxide, chlorides, fluoride, sulfates and combinations thereof. The total amount of refining agents may be from 0.03 - 1.5 % by weight.

In another embodiment the glass composition comprises a fining agent selected from the list of arsenic oxide, antimony oxide, tin oxide or cerium oxide. The total amount of these refining agents may be from 0.03 - 1.5 % by weight. According to a preferred embodiment of the present invention the amount of each of $As_2O_3$ and/or, $Sb_2O_3$ and/or, $SnO_2$ and/or $Ce_2O_3$ in the glass composition is less than 1000 ppm, preferably less than 500 ppm and most preferably less than 200 ppm. According to another preferred embodiment of the present invention, the glass composition is free of $As_2O_3$ and/or, $Sb_2O_3$ and/or, $SnO_2$ and/or $Ce_2O_3$.

In one embodiment the glass composition comprises a fining agent selected from the list of chlorides, sulfates and combinations thereof. The total amount of refining agents may be from 0.03 - 1.5 % by weight.

According to a preferred embodiment of the present invention, the glass composition of the present invention is a halogenide refined glass composition and preferably, a chloride or fluoride refined glass composition and most preferably a chloride refined glass composition. Such refining agents improve the electrical conductivity and reduce the specific resistance in the glass melt.

The glass composition might comprise coloring agents such as oxides of Co, Ni, Fe, Nd, Mo and other suitable coloring agents.

The glass composition may contain iron, calculated as $Fe_2O_3$, in an amount of less than 0.05% by weight, less than 0.01% by weight, or less than 0.005% by weight. In one embodiment, the glass composition may contain $Fe_2O_3$ in an amount of at least 0.0005% by weight, at least 0.001% by weight, or at least 0.002% by weight. In related embodiments, the glass composition may contain $Fe_2O_3$ in an amount of 0.0005% to 0.05% by weight, 0.001% to 0.01% by weight, or 0.002% to 0.005% by weight. The amount of $Fe_2O_3$ as indicated above relates to the total weight of the total iron in the glass composition, as if present in the form of the $Fe_2O_3$ oxide. This does not mean that all of the iron is present in this form. For example, any iron in the FeO form is included.

In a further embodiment, the glass composition may contain $Fe_2O_3$ in an amount of less than 1000 ppm by weight, less than 500 ppm by weight, or less than 200 ppm by weight. Optionally, the glass composition may contain $Fe_2O_3$ in an amount of at least 1 ppm by weight, at least 10 ppm by weight, or at least 50 ppm by weight. In related embodiments, the glass composition may contain $Fe_2O_3$ in an amount of 1 to 1000 ppm, in an amount of 10 to 500 ppm, or in an amount of 50 to 200 ppm.

Optional glass compositions include $Al_2O_3$ in an amount of at least 1.0% by weight or at least 5.0% by weight or even at least 10.0% by weight. The amount of $Al_2O_3$ may be up to 25.0% by weight, up to 20.0% by weight or up to 18.0% by weight. In certain embodiments, the amount of $Al_2O_3$ may range from 1.5% to 23.0% by weight, from 5.0% to 20.0% by weight or from 10.0% to 18.0% by weight.

Additionally, or alternatively, the glass composition may include $B_2O_3$ in an amount of at least 0.0% by weight or at least 8.0% by weight or even at least 10.0% by weight. The amount of $B_2O_3$ may be up to 25.0% by weight, up to 23.0% by

weight, up to 20.0% by weight, up to 18.0% by weight, up to 16.0% by weight or up to 14.0% by weight. In certain embodiments, the amount of $B_2O_3$ may range from 0.5% to 20.0% by weight, from 8.0% to 16.0% by weight, or from 10.0% to 14.0% by weight.

According to one embodiment the glass composition might be free of heavy metals. Many highly viscous glass compositions contain significant amounts of $SiO_2$, $Al_2O_3$ and $B_2O_3$. Optionally, the glass compositions used in this invention have a total content of $SiO_2$, $Al_2O_3$ and $B_2O_3$ of at least 75.0% by weight, at least 78.0% by weight or even at least 85.0% by weight. The total amount of $SiO_2$, $Al_2O_3$ and $B_2O_3$ may be limited to not more than 97.0% by weight, up to 93.5% by weight or up to 90.0% by weight. Optionally, the amount of $SiO_2$, $Al_2O_3$ and $B_2O_3$ may range from 75.0% to 95.0% by weight, from 78.0% to 92.5% by weight or from 85.0% to 90.0% by weight.

In one embodiment, the glass composition may be a lithium aluminosilicate glass comprising from 3.0 to 4.2% $Li_2O$ by weight, from 19 to 23% $Al_2O_3$ by weight, from 60 to 69% SiOz by weight, optionally comprising TiOz and/or $ZrO_2$, preferably comprising from 2.0 to 4.0% TiOz and/or ZrOz.

According to one embodiment of the present invention, the glass tube has a glass composition comprising 60 to 85 wt.-% $SiO_2$, 5 to 20 wt.-% $B_2O_3$, 1 to 10 wt.-% $Al_2O_3$, 0 to 2 wt.-% $Fe_2O_3$, 2 to 10 wt.-% $Na_2O$, 0 to 5 wt.-% $K_2O$, 0 to 2 wt.-% BaO, 0 to 2 wt.-% CaO, 0 to 10 wt.-% $TiO_2$, based on all oxides present in the glass composition.

The inventors found that due to the reduced amount of gas bubbles on the contact surface of a glass tube the yield of the glass tubes can be improved. Furthermore, by the inventive apparatus and the inventive method, it is possible to improve the quality of the generated glass tubes and, therefore, of the glass products obtained from the glass tubes, especially for the use in the pharmaceutically sector. Thus according to one embodiment the inventive glass tube obtainable by the method of the present invention can be used in various applications and sectors and especially in the pharmaceutical sector. According to one embodiment of the present invention the inventive glass tube is used as an intermediate product for the production of pharmaceutical containers, preferably for the production of ampoules, vials, syringes and/or cartridges.

Preferred embodiments of the invention are shown in the figures and will be explained in more detail in the following description, wherein identical reference signs refer to identical or similar components or elements.

Brief description of the figures:

Figure 1 is a schematic of an embodiment of the inventive glass tube forming apparatus according to claim 1.
Figure 2 is a schematic of an embodiment of the inventive glass tube forming apparatus comprising more than one tube forming body
Figure 3 is a schematic of an embodiment of the inventive glass tube forming apparatus comprising more than one electrode.
Figure 4 is a schematic of an embodiment of the inventive glass tube forming apparatus comprising additional electronic components.
Figure 5 is an exemplary schematic of the electric circuit.

Figure 1 shows a schematic of an embodiment of the glass tube forming apparatus. The glass tube forming apparatus comprises a tube forming body (1). The tube forming body (1) is in form of a Danner mandrel and consists of a ceramic material and is covered with a platinum alloy as metallic layer. The Danner mandrel is mounted on a holder (2). A strand of molten glass (3) flows on the tube forming body (2). The glass raw material is melted in the melting vessel (7) and afterwards flows into the fining vessel (6), a working tank (5) and a distributor (4). From the distributor a strand of molten glass (3) flows on the tube forming body (1). The glass is withdrawn from the tube forming body (1) in form of a glass tube. A molybdenum electrode (8) is present in the melting vessel (7) and is in direct contact with the glass melt. The electrode is connected electrical with wires (9) with the metallic layer on the glass tube forming body (1).

Due to the different metals on the tube forming body and of the metallic electrode a potential drop is generated, such that a direct current flows from the tube forming body (1) to the at least one molybdenum electrode (8).

Figure 2 shows a further schematic of an embodiment of the glass tube forming apparatus. The difference to Figure 1 is that the glass tube forming apparatus comprises two tube forming bodies (1), which are in form of a Danner mandrel and consist of a ceramic material and are covered with a platinum alloy as metallic layer. The strand of molten glass (3) flows from the distributor (4), is afterwards divided into several strands, which flow on the several tube forming bodies (1). A molybdenum electrode (8) is present in the melting vessel (7) and is in direct contact with the glass melt. The electrode is connected electrical with wires (9) with the metallic layer on the two glass tube forming bodies (1).

Due to the different metals on the tube forming bodies and of the metallic electrode a potential drop is generated, such that a direct current flows from the two tube forming bodies (1) to the at least one molybdenum electrode (8).

Figure 3 shows a further schematic of an embodiment of the glass tube forming apparatus. The difference to

Figure 1 is that the glass tube forming apparatus comprises several molybdenum electrodes (8) which are present in the melting vessel (7) and are in direct contact with the glass melt. The electrodes are connected electrical with wires (9) with the metallic layer on the glass tube forming body (1).

Due to the different metals on the tube forming body and of the metallic electrode a potential drop is generated, such that a direct current flows from the tube forming body (1) to the at least one molybdenum electrode (8).

Figure 4 shows a further schematic of an embodiment of the glass tube forming apparatus. The difference to Figure 1 is that an electric circuit (10) comprising electronic components is located in series in the electrical connection between the tube forming body and the at least one electrode.

Figure 5 shows a schematic of the electric circuit. In the electric circuit a DC current source, an electronic voltage filter in form of a resistor and an electronic voltage control in form of a rotary potentiometer are arranged in series between the at least one metallic electrode and the tube forming body.

## Methods and Examples

### Manufacturing of glass tubes

A borosilicate glass composition as set out below has been used to manufacture two different glass tubes (Glass tubes I and glass tubes II) wherein the manufacturing process is based on a Danner process. The temperature in the melting vessel was about 1600 to about 1650 °C. The average time of the glass melt in the melting vessel was about 40 to 60 hours. Glass tubes with an inner diameter $d_i$ from 6 mm to 40 mm, and a length $l_a$ from 1500 to 1800 mm have been produced. Glass tubes I have been manufactured according to the prior art process and glass tubes II have been manufactured according to the inventive method. The manufacturing parameters like temperatures, time, withdrawing speed have been kept constant in these two examples. Furthermore, the equipment such as for example the melting or fining vessel, the electrodes or the glass tube forming body were identical.

Borosilicate Glass:

75 wt.-% $SiO_2$, 10.5 wt.-% $B_2O_3$, 5 wt.-% $Al_2O_3$, 7 wt.-% $Na_2O$, 1.5 wt.-% CaO

As a difference between Example I and Example II, the tube forming body has been connected electrical with the electrodes in the melting vessel as shown in Figure 2. By this electric circuit a potential drop between the tube forming body and the at least one electrode was generated that caused a direct current. By this direct current the voltage that has been measured directly at the tube forming body was reduced by 258.0 mV. By this electric circuit the oxygen partial pressure on the glass melt at the point of the tube forming body has been significantly reduced resulting in a reduced amount of gas bubbles in the glass melt at the tube forming body.

The obtained glass tubes I and II have been analyzed in view of the aggregated airline length on the contact surface of the glass tubes as can be seen in the table below. The below results have been measured for a lengths of 10 m.

| | Aggregated Airline length per 10 m at tube forming body 1 | Aggregated Airline length per 10 m at tube forming body 2 |
|---|---|---|
| Example I | 123 cm | 350 cm |
| Example II | 2 cm | 4 cm |

From the above examples it can be seen that by the inventive method and the inventive tube forming apparatus it is possible to reduce the amount of gas bubbles on the contact surface of a glass tube and to provide a glass tube having an aggregated airline length of less than 0.10 m per 1.0 m tube length on the contact surface of the glass tube, wherein the aggregated airline length is defined as the sum of the lengths of closed airlines having a length > 15 mm and open airlines having a length > 2 mm. Especially it has been shown that by the inventive method and the inventive tube forming apparatus a glass tube having an aggregated airline length of about 0.002 m per 1.0 m tube length and 0.004 m per 1.0 m tube length on the contact surface of the glass tube has been provided.

Although the present invention has been described with reference to preferred examples of embodiments, it is not limited thereto but can be modified in a variety of ways.

List of reference numerals

1 glass tube forming body covered at least partly with a metallic layer
2 holder of the glass tube forming body
3 strand of molten glass
4 distributor
5 working tank
6 fining vessel
7 melting vessel
8 metallic electrode
9 electrical connection between the tube forming body and the at least one electrode
10 electric circuit comprising electronic components
11 external DC current source
12 electronic voltage filter in form of a resistor
13 electronic voltage control in form of a rotary potentiometer

## Claims

**1.** A glass tube forming apparatus comprising:

a) a tube forming body configured to receive a flow of molten glass, wherein the molten glass is withdrawn from the forming body in form of a glass tube, and
b) at least one metallic electrode, wherein the at least one metallic electrode is mounted in the glass melt in spaced relation to the tube forming body,
wherein the tube forming body is covered at least partly with a metallic layer,
and wherein the tube forming body is connected electrical with the at least one electrode.

**2.** The glass tube forming apparatus according to claim 1, wherein the metal of the metallic layer on the tube forming body and/or the metallic electrode are selected from the group consisting of molybdenum, tungsten, tantalum, tin oxide, platinum, rhodium, iridium, and alloys thereof, high melting refractory metals, oxides thereof and alloys thereof, oxide dispersion-strengthened metal compounds and alloys thereof, and heat-resistant steel, and preferably are selected from the group consisting of platinum, molybdenum, tungsten and alloys thereof and oxide dispersion-strengthened metal compounds and alloys thereof.

**3.** The glass tube forming apparatus according to claim 2, wherein the metal of the metallic layer on the tube forming body and the metallic electrode are different metals, preferably are selected from the group consisting of platinum, molybdenum, tungsten and alloys thereof as well as oxide dispersion-strengthened alloys and compounds thereof and more preferably the metal of the metallic layer on the tube forming body is platinum or platinum alloy or an oxide dispersion-strengthened platinum alloy and the metal of the metallic electrode is molybdenum or tungsten or an oxide dispersion-strengthened molybdenum or tungsten alloy.

**4.** The glass tube forming apparatus according to any of the preceding claims, wherein the at least one metallic electrode is mounted in the melting vessel and/or the fining vessel and/or working tank and/or distributor, and preferably is mounted in the melting vessel.

**5.** The glass tube forming apparatus according to any of the preceding claims, further comprising an electronic voltage filter, that is located in series in the electrical connection between the tube forming body and the at least one electrode, and preferably the electronic voltage filter comprises a resistor, a capacitor and/or an inductance.

**6.** The glass tube forming apparatus according to any of the preceding claims, further comprising an electronic voltage adjustment or electronic voltage control, that is located in series in the electrical connection between the tube forming body and the at least one electrode, and preferably the electronic voltage control is a variable resistor and most preferably selected from the group consisting of rotary potentiometer and push potentiometer.

**7.** The glass tube forming apparatus according to any of the preceding claims, further comprising an external direct current source, that is located in series in the electrical connection between the tube forming body and the at least one electrode.

**8.** The glass tube forming apparatus according to any of the preceding claims, wherein the tube forming body is

A) a Danner mandrel or
B) is a needle and an outlet nozzle.

**9.** Method for reducing the amount of gas bubbles on the contact surface of a glass tube the method comprising the steps of

i) providing a tube forming body, configured to receive a flow of molten glass, wherein the tube forming body is covered at least partly with a metallic layer, and
ii) providing at least one metallic electrode, wherein the at least one metallic electrode is mounted in the glass melt in spaced relation to the tube forming body,
iii) providing an electrical connection between the tube forming body and the at least one electrode,
iv) generating a potential drop between the tube forming body and the at least one electrode to cause a direct current and
v) withdrawing the molten glass from the tube forming body in form of a glass tube during the direct current flows between the tube forming body and the at least one electrode.

**10.** The method according to claim 9, wherein the potential drop is generated at least partly by a difference of the metal of the metallic layer on the tube forming body and the metallic electrode, wherein the metals are selected from the group consisting of molybdenum, tungsten, tantalum, tin oxide, platinum, rhodium, iridium and alloys thereof, high melting refractory metals, oxides thereof and alloys thereof, oxide dispersion-strengthened metal compounds and alloys thereof, and heat-resistant steel, and preferably are selected from the group consisting of platinum, molybdenum tungsten and alloys thereof and oxide dispersion-strengthened metal compounds alloys thereof.

**11.** The method according to any of claims 9 or 10, wherein the direct current flows from the tube forming body to the at least one metallic electrode and preferably, the direct current density on the tube forming body is in the range from 0.05 $mA/cm^2$ to 5.0 $mA/cm^2$, preferably from 0.1 $mA/cm^2$ to 3.0 $mA/cm^2$ and most preferably in the range from 0.5 to 2.0 $mA/cm^2$.

**12.** Glass tube produced by the method according to any of claims 9 to 11.

**13.** Glass tube having an aggregated airline length of less than 0.10 m per 1.0 m tube length on the contact surface of the glass tube, wherein the aggregated airline length is defined as the sum of the lengths of closed airlines having a length > 15 mm and open airlines having a length > 2 mm.

**14.** The glass tube according to claim 13, having an aggregated airline length of less than 0.050 m per 1.0 m tube length on the surface of the inside of the glass tube, preferably less than 0.010 m per 1.0 m tube length on the surface of the inside of the glass tube, and most preferably 0.0050 m per 1.0 m tube length on the surface of the inside of the glass tube or
in the range of 0.00010 m to less than 0.10 m per 1.0 m tube length on the surface of the inside of the glass tube, preferably in the range of 0.00030 m to less than 0.050 m per 1.0 m tube length on the surface of the inside of the glass tube, preferably in the range of 0.00070 m to less than 0.010 m per 1.0 m tube length on the surface of the inside of the glass tube, and most preferably in the range of 0.0010 m to less than 0.0050 m per 1.0 m tube length on the surface of the inside of the glass tube.

**15.** The glass tube according to any of claims 12 to 14, the glass tube having a glass composition comprising 60 to 85 wt.-% $SiO_2$, 5 to 20 wt.-% $B_2O_3$, 1 to 10 wt.-% $Al_2O_3$, 0 to 2 wt.-% $Fe_2O_3$, 2 to 10 wt.-% $Na_2O$, 0 to 5 wt.-% $K_2O$, 0 to 2 wt.-% BaO, 0 to 2 wt.-% CaO, 0 to 10 wt.-% $TiO_2$, based on all oxides present in the glass composition.

**16.** The glass tube according to any of claims 12 to 15, the glass tube having an outer diameter $d_o$ from 5 mm to 55 mm, preferably from 8 mm to 40 mm, more preferably from 9 mm to 35 mm, even more preferably from 10 mm to 30 mm, and most preferably from 11 mm to 25 mm, and/or

a wall thickness WT from 0.4 mm to 2.5 mm, preferably from 0.6 mm to 2.3 mm, more preferably from 0.8 mm to 2.1 mm, and most preferably from 1.0 mm to 1.8 mm, and/or an inner diameter $d_i$ from 4 to 51 mm, preferably from 6 mm to 46 mm, more preferably from 10 mm to 41 mm, even more preferably from 16 mm to 40 mm, and most preferably from 20 mm to 35 mm, and/or
a length $l_a$ from 500 to 3500 mm, preferably from 800 to 3000 mm, and most preferably from or 1200 to 2000 mm.

**17.** Use of a glass tube according to claims 12 to 16 as an intermediate product for the production of pharmaceutical containers, preferably for the production of ampoules, vials, syringes and/or cartridges.

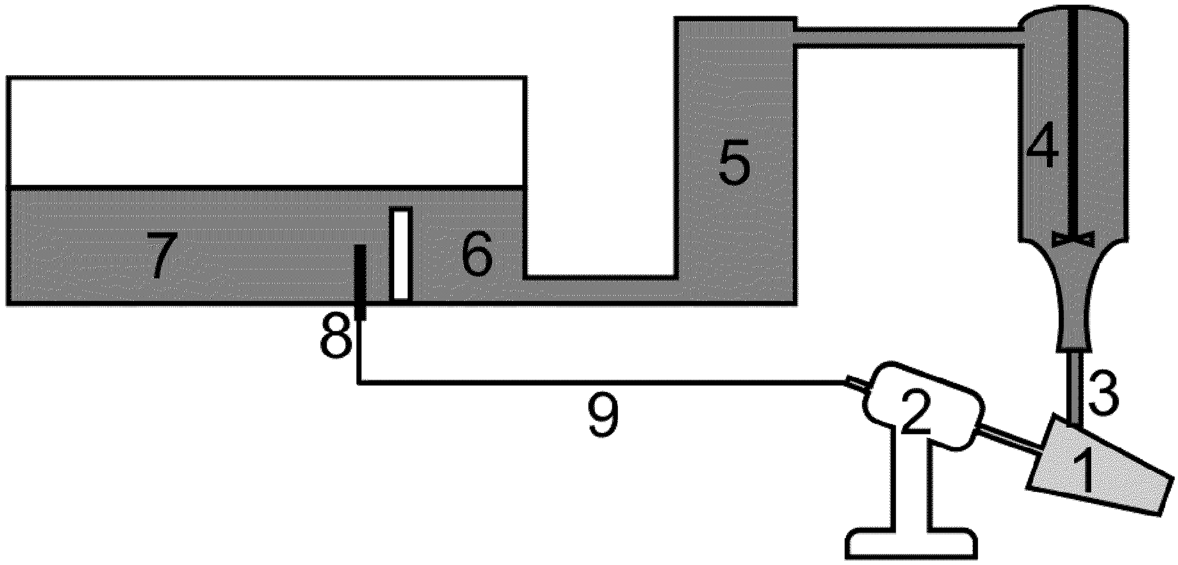


Figure 1

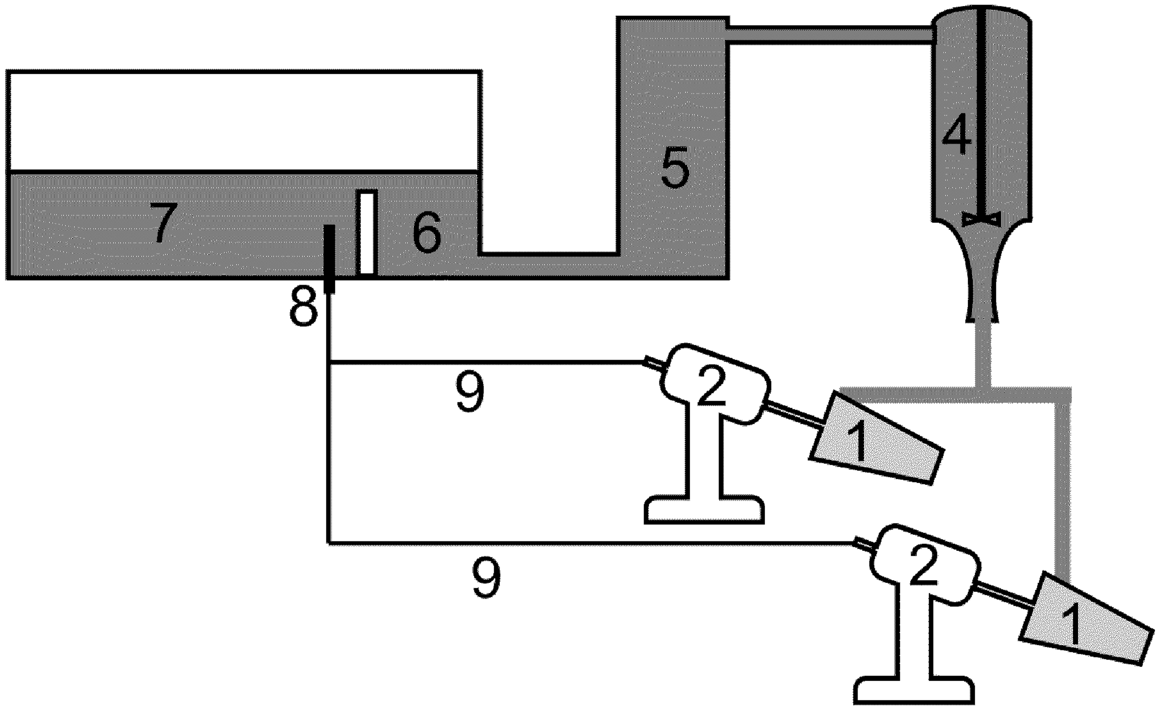


Figure 2

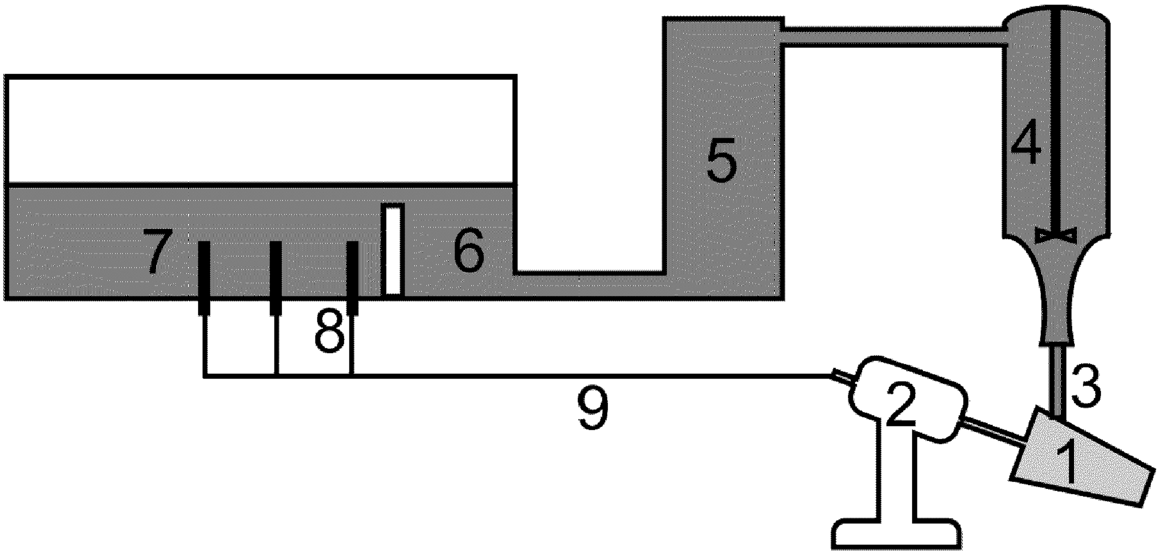


Figure 3

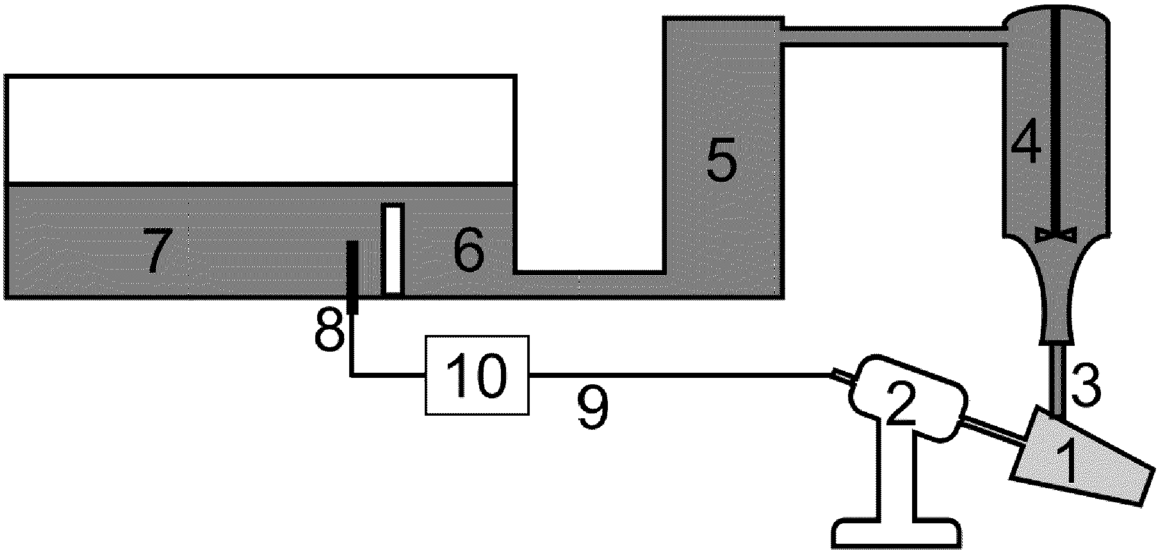


Figure 4

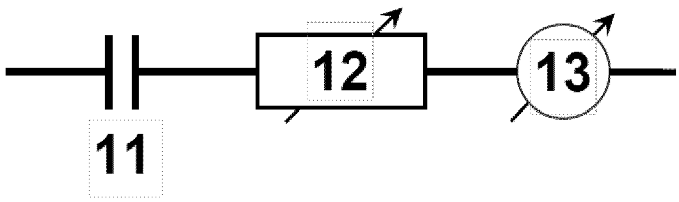


Figure 5

Europäisches Patentamt
European Patent Office
Office européen des brevets

# EUROPEAN SEARCH REPORT

Application Number
EP 24 22 1608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 3 360 353 A (TOROK JULIUS J) 26 December 1967 (1967-12-26)<br>* figures and claims and "ABSTRACT OF THE DISCLOSURE".;<br>the whole document *<br>----- | 12,17<br>1-11 | INV.<br>C03B5/167<br>C03B7/07<br>C03B17/04<br>C03B5/16 |
| X<br>A | US 6 595 029 B1 (DICK ERHARD [DE] ET AL) 22 July 2003 (2003-07-22)<br>* figures and claims;<br>the whole document *<br>----- | 12,17<br>1-11 | |
| A | DE 199 60 211 A1 (SCHOTT ROHRGLAS GMBH [DE]) 12 July 2001 (2001-07-12)<br>* figures and claims;<br>the whole document *<br>----- | 1-11 | |
| A | DE 199 55 827 A1 (SCHOTT GLAS [DE]) 7 June 2001 (2001-06-07)<br>* the whole document *<br>----- | 1-11 | |
| X | Suprasil: "Quartz Glass for Optics Data and Properties",<br>,<br>1 May 2011 (2011-05-01), XP093280457,<br>Retrieved from the Internet:<br>URL:https://sites.astro.caltech.edu/sedm/_downloads/2562e19ff76ec4ab03f0598d537f8428/Heraeus_SiO2-May-2011.pdf<br>* the whole document *<br>----- | 13-16 | TECHNICAL FIELDS SEARCHED (IPC)<br>C03B |

The present search report has been drawn up for all claims

| Place of search | Date of completion of the search | Examiner |
|---|---|---|
| The Hague | 23 May 2025 | Gkerou, Elisavet |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 22 1608

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| US 3360353 | A | 26-12-1967 | NONE | | |
| US 6595029 | B1 | 22-07-2003 | DE 10045923 | A1 | 23-05-2001 |
| | | | EP 1084996 | A1 | 21-03-2001 |
| | | | US 6595029 | B1 | 22-07-2003 |
| DE 19960211 | A1 | 12-07-2001 | NONE | | |
| DE 19955827 | A1 | 07-06-2001 | AT E262492 | T1 | 15-04-2004 |
| | | | CN 1297854 | A | 06-06-2001 |
| | | | DE 19955827 | A1 | 07-06-2001 |
| | | | EP 1101740 | A1 | 23-05-2001 |
| | | | JP 4165630 | B2 | 15-10-2008 |
| | | | JP 2001172024 | A | 26-06-2001 |
| | | | US 6629437 | B1 | 07-10-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0464501 A
- DE 19955827
- US 1219709 A
- DE 10048815 C1
- US 3360353 A
- US 3523782 A
- DE 10348098 A1
- WO 03018491 A1
- US 6274525 B1
- US 3775823 A

### Non-patent literature cited in the description

- Principles for determining viscosity and viscometric fixed points. February 1998
- Determination of viscosity by rotation viscometers. February 1998
- **TH. FREY** ; **F. G. K. BAUCKE et al.** *Glastechn. Ber.*, 1980, vol. 53, 116-123